# EUROPEAN PATENT SPECIFICATION

(11) **EP 0 939 496 B1**
(45) Date of publication and mention of the grant of the patent: **25.11.2009**
(21) Application number: 99301329.1
(22) Date of filing: 24.02.1999
(51) Int. Cl.: H04B 1/10

(54) **Adjacent channel interference detection for FM radio receiver**
Nachbarkanalstörungsdetektor eines FM-Empfängers
Détecteur d'interférence des canaux adjacents dans un récepteur FM

(30) Priority: 24.02.1998 JP 4237398
(43) Date of publication of application: 01.09.1999
(73) Proprietor: SANYO ELECTRIC CO., LTD., Moriguchi-shi, Osaka (JP)
(72) Inventor: Kobayashi, Keiji, Ora-gun, Gunma-ken (JP)
(74) Representative: Cross, Rupert Edward Blount

(56) References cited:
- EP-A- 0 543 396
- EP-A- 0 561 117
- US-A- 5 307 515

## Description

### BACKGROUND OF THE INVENTION

### FIELD OF THE INVENTION

This invention relates to a radio receiver with measures against adjacent-channel interference.

### DESCRIPTION OF THE RELATED ART

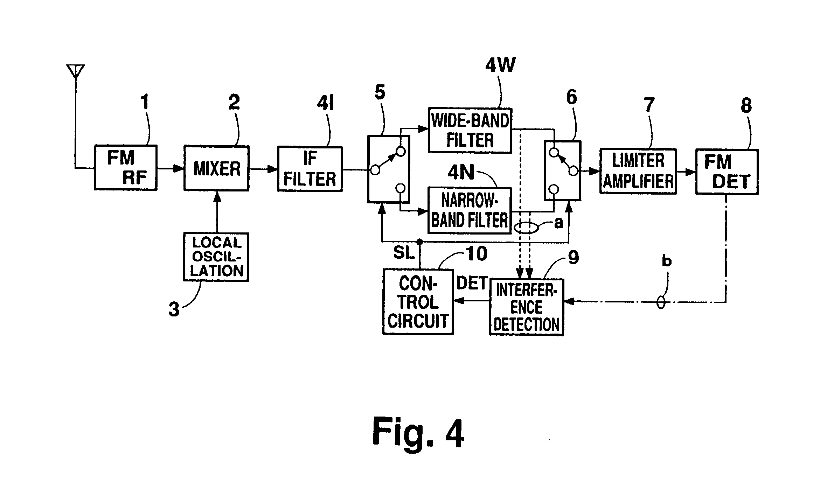

Typically, if an interference channel having strong electric fields exists next to a desired channel in an FM (Frequency Modulation) radio receiver, radio waves of the interference channel may enter the receiving system and cause adjacent-channel interference. That is, the interference channel interferes with the desired channel. In order to prevent such interference, FM radio receivers typically have two IF filters, one for a wide band, and the other for a narrow band. When adjacent-channel interference occurs, the interference channel is rejected by limiting FM IF signals to a narrower band. The configuration of such an FM radio receiver is shown in Fig. 4.

In Fig. 4, FM RF signals are tuned and amplified by an FM-RF tuned amplifier circuit 1 and are then frequency-converted into IF signals having a center frequency of 10.7 MHz, by a mixer 2 according to local oscillation signals from a local oscillation circuit 3. The IF (Intermediate Frequency) signals are band-limited by an IF filter 4I and then are sent to both wide-band filter 4W and a narrow-band filter 4N via a selector circuit 5, resulting in band limitation of the IF signals according to each passing bandwidth. Output signals from either the wide-band filter 4W or the narrow-band filter 4N are selected by a selector circuit 6. Output signal from one of them is amplified by a limiter amplifier 7 and then are FM-detected by an FM-detection circuit 8. At the time of normal reception, output signals from the wide-band filter 4W (hereinafter referred to as wide IF signals) are selected and FM-detected.

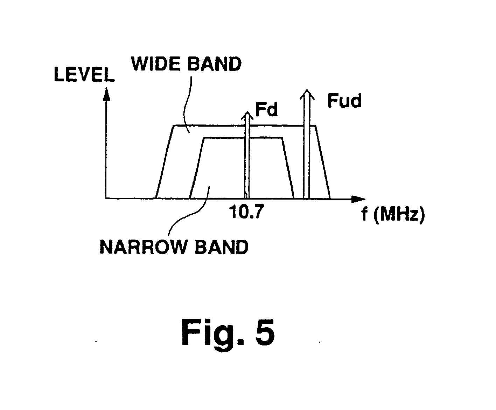

When FM is received, it is assumed that interference channel Fud exists next to desired channel Fd. As shown in Fig. 5, interference channel Fud is within the passing band of the wide-band filter 4W, but outside the passing band of the narrow-band filter 4N. In such a case, the relation between the passing bands of the wide-band filter 4W and the narrow-band filter 4N is as shown in Fig. 5. An adjacent-channel interference detection circuit 9 detects adjacent-channel interference by observing the relationship between output levels of the wide-band filter 4W and the narrow-band filter 4N with connection as signal line a or observing a smoothed level of detection output from the FM-detection circuit 8 with connection as signal line b. When the adjacent-channel interference detection circuit 9 detects adjacent-channel interference, detection signal DET is generated. On the detection signal DET, a control circuit 10 judges that adjacent-channel interference has occurred. According to selection signal SL, output signals from the narrow-band filter 4N (hereinafter referred to as narrow IF signals) are selected. Interference channel Fud is outside the passing band of the narrow-band filter 4N, and so is rejected by the narrow-band filter 4N. As a result, the adjacent-channel interference can be rejected and reception will be improved.

Conventionally, adjacent-channel interference has been detected by observing the relationship between output levels of the wide-band filter 4W and the narrow-band filter 4N or a smoothed output level of the FM-detection circuit 8, as stated above. However, in the conventional detection method (using signal line a), it is desirable that when observing the relation between levels of wide IF signals and narrow IF signals, output signals from the wide-band filter 4W and narrow-band filter 4N be separately smoothed and both smoothed levels compared. This causes a problem of complex circuitry. Especially, placing these circuits on an IC necessitates externally attached capacitors for smoothing and externally attached pins to which these capacitors are connected. These circuits are therefore not suitable for reduction to IC. Also, the detection method (using signal line b) by observing output signals from the FM-detection circuit 8 detects adjacent-channel interference by the difference because of interference channel Fud between a smoothed level of detection output and a level corresponding to the center frequency of IF signals. However, a difference only exists when interference occurs with a level of interference channel Fud higher than that of desired channel Fd. When interference has only a slight effect, the smoothed level does not clearly change, and it is difficult to detect adjacent-channel interference.

### SUMMARY OF THE INVENTION

The present invention provides an FM radio receiver with simple circuitry which can reliably detect adjacent-channel interference, even when the interference effect is slight.

According to the present invention, when the difference between a count value of an IF counter and the center frequency of IF signals arises in the case of an FM radio receiver receiving an interference channel with the desired channel, adjacent-channel interference is detected.

Adjacent-channel interference can therefore be rejected using simple circuitry. Also, externally attached additional devices are unnecessary, which enables design of a suitable IC FM radio receiver.

When adjacent-channel interference is detected, more detailed and reliable judgment on whether adjacent-channel or other interference exists can be made by detecting received electric field strength of the desired channel. When there is other interference, judgment on whether electric field strength of the desired channel is small or interference by noise generating near the desired channel has occurred can be made because electric field strength near the desired channel is detected. Therefore, a receiving state of an FM radio receiver can be reliably improved by substantially accurate selection of output signals from a wide-band or narrow-band filter in the above circumstances.

### BRIEF DESCRIPTION OF THE DRAWINGS

Fig. 1 is a block diagram showing an embodiment of the present invention.
Fig. 2 is a flowchart outlining the operation of Fig. 1.
Figs. 3A, 3B, and 3C are frequency characteristic views for describing the operation of Figs. 1 and 2.
Fig. 4 is a block diagram showing a conventional FM radio receiver.
Fig. 5 is a frequency characteristic view showing the operation of a conventional FM radio receiver.

### DESCRIPTION OF THE PREFERRED EMBODIMENT

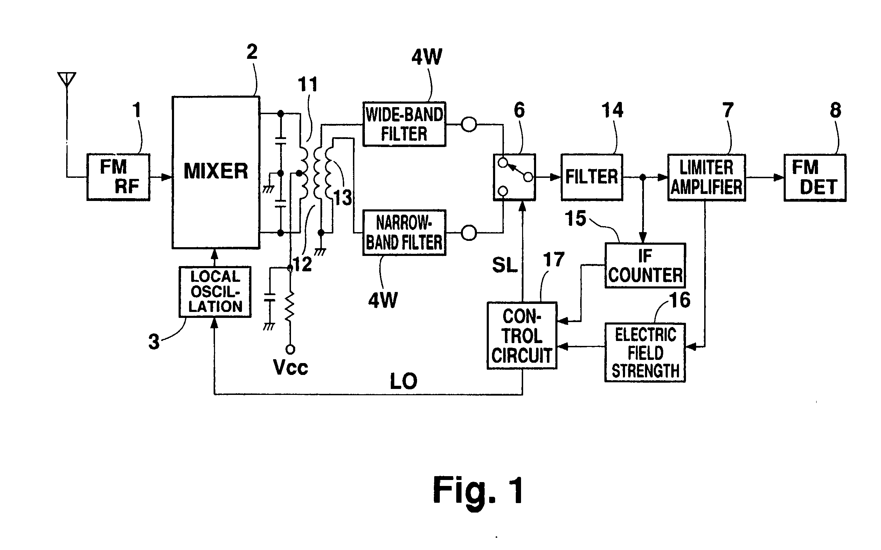

Fig. 1 is a block diagram of an embodiment of the present invention. 11 is a primary coil where FM's IF signals from a mixer 2 are derived; 12 and 13 are the first and second secondary coils corresponding to the primary coil 11; 14 is a filter comprising an IF filter with either a wide-band filter 4W or a narrow-band filter 4N; 15 is an IF counter for counting the frequency of output signals from the filter 14; 16 is an electric field strength detection circuit for detecting received electric field strength according to output signals from the filter 14; and 17 is a control circuit for controlling a selector circuit 6 and a local oscillation circuit 3. In Figs. 1 and 4, the same circuits have the same signs.

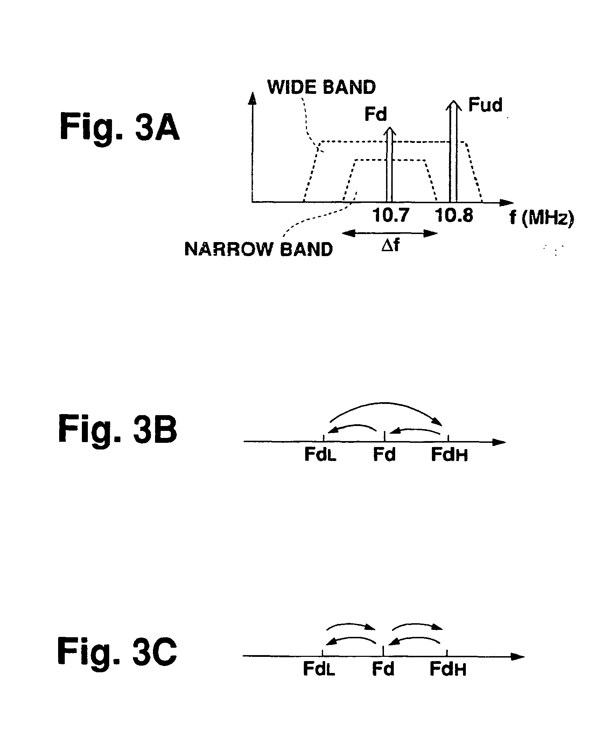

In Fig. 1, IF signals from the mixer 2 are derived at the primary coil 11, which is a common output circuit. The same IF signals are derived at the secondary coils 12 and 13 and their IF signals are applied to the wide-band filter 4W and narrow-band filter 4N respectively. Each of the wide-band filter 4W and narrow-band filter 4N has a filter characteristic as shown in Fig. 3A. Either wide IF signals or narrow IF signals are then selected and applied to the filter 14. A necessary characteristic of the IF filter can be obtained by applying to the filter 14 signals of a frequency selected by either the wide-band filter 4W or the narrow-band filter 4N. Output signals from the filter 14 are amplified by a limiter amplifier 7 and then are FM-detected by an FM-detection circuit 8.

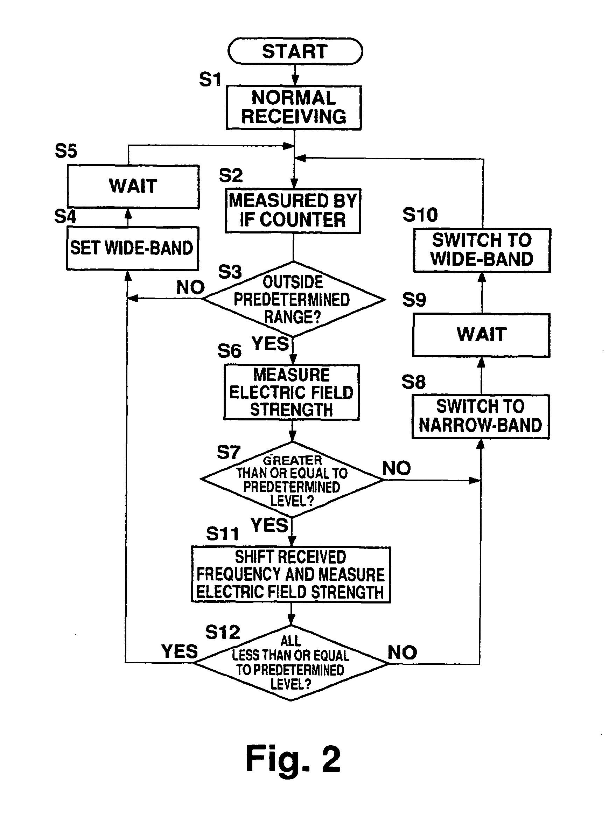

Next, the operation of the FM radio receiver shown in Fig. 1 will be described with reference to the flowchart shown in Fig. 2. The FM radio receiver is in a normal receiving state; wide IF signals from the wide-band filter 4W are selected and FM-detected (S1). The control circuit 17 begins to detect during normal reception whether adjacent-channel interference has occurred or not. The IF counter 15 counts the frequency of wide IF signals from the filter 14. The IF counter 15 detects, for example, the zero-crossing of IF signals and counts based on this crossing. A count value of the IF counter 15 is output to the control circuit 17. If the detection of adjacent-channel interference begins, the control circuit 17 obtains the count value by which whether or not adjacent-channel interference has occurred is determined (S2). The control circuit 17 judges whether or not the count value is outside a predetermined frequency range (S3). As shown in Fig. 3A, if, for example, interference channel Fud exists 0.1 MHz away from desired channel Fd and the electric field strength of interference channel Fud is greater than that of desired channel Fd, IF signals of the desired channel and interference channel overlap and the level of IF signals of the interference channel is higher than that of IF signals of the desired channel. This results in change of the center frequency of IF signals toward that of the interference channel and the center frequency of wide IF signals is not equal to 10.7 MHz, which is the center frequency of desired channel Fd. As a result, when FM-detection is performed, interference channel Fud interferes with desired channel Fd, resulting in a worsened receiving state.

The IF counter 15 counts the frequency of wide IF signals accurately. When such adjacent-channel interference has occurred, a count value will therefore not be equal to the value corresponding to 10.7 MHz (desired channel). The control circuit 17 judges from the count value whether or not adjacent-channel interference has occurred. The control circuit 17 has predetermined detection range Δf for an IF count value, as shown in Fig. 3A. If a count value is outside detection range Δf, the control circuit 17 judges that there is an interference channel and, if a count value is within detection range Δf, the control circuit 17 judges that only the desired channel is being received and that there is no interference channel. However, the frequency of FM signals continually shift. The frequency of IF signals may not be necessarily equal to 10.7 MHz, depending on the detection timing of the IF counter 15. In order to avoid erroneous detection of adjacent-channel interference resulting from frequency shift, detection range Δ f as shown in Fig. 3A is therefore determined. A change in the frequency of wide IF signals within this detection range Δf will be considered to have occurred by frequency shift. It is preferable that Δf should be equal to a passing frequency band of the narrow-band filter 4N.

If the control circuit 17 judges that a count value of the IF counter 15 is within predetermined detection range Δf, the control circuit 17 considers that there is no adjacent-channel interference and generates switching signal SL for the first state. Wide IF signal are selected according to the switching signal SL. That is, the normal receiving state of the FM radio receiver continues (S4), and then the control circuit 17 turns into a wait state (S5). After a predetermined time (for example, about 10 seconds), the process returns to step S1 and again begins to search for adjacent-channel interference.

Adjacent-channel interference can be detected in step S3, but the frequency of IF signals may change from a cause other than adjacent-channel interference. When the control circuit 17 judges that a count value of the IF counter 15 is outside predetermined detection range Δf, the control circuit 17 therefore proceeds to the next step for judging whether its cause is really adjacent-channel interference or not.

Output signals from the limiter amplifier 7 are applied to the electric field strength detection circuit 16 which smooths the signals to detect received electric field strength. Output signals from the electric field strength detection circuit 16 are sent to the control circuit 17 and the received electric field strength is measured (S6). With wide IF signals selected, the control circuit 17 then judges whether the received electric field strength detected is greater than or equal to a predetermined level (S7). A received electric field strength equal to or greater than a predetermined level shows that an interference channel with great electric field strength interfering with the desired channel causes a change in the frequency of IF signals or that an interference channel with even greater electric field strength interfering with the desired channel with great electric field strength causes a change in the frequency of IF signals, which results in the judgment that adjacent-channel interference has occurred. Received electric field strength less than or equal to the predetermined level results in a judgment that other interference may have occurred because of small electric field strength of the desired channel itself.

When the received electric field strength is greater than or equal to the predetermined level, the control circuit 17 judges that adjacent-channel interference has actually occurred and generates switching signal SL for the second state. According to switching signal SL, narrow IF signals from the narrow-band filter 4N are selected and FM-detected. As shown in Fig. 3A, if interference channel Fud is within the passing band of the wide-band filter 4W and outside the passing band of the narrow-band filter 4N, interference channel Fud will be rejected by the narrow-band filter 4N. The adjacent-channel interference can therefore be rejected, and receiving state of the FM radio receiver (S8) improves as a result. The control circuit 17 then switches to wait state (S9). After a predetermined time (about 10 seconds, for example) has elapsed, wide IF signals are selected according to switching signal SL for the first and the FM radio receiver thereby switches to the normal receiving state (S10). The process then returns to step S1 and begins to detect adjacent-channel interference again.

In step S7, if a judgment that other interference may have occurred because of small electric field strength of the desired channel itself is made, the control circuit 17 detects noise etc., which interfere with the desired channel, in detail. If the electric field strength of the desired channel itself is small, noise and other factors interfere with the desired channel. First, the control circuit 17 shifts local oscillation control signal LO and a local oscillation frequency of the local oscillation circuit 3, which shifts the frequency of RF signals corresponding to the center frequency of IF signals of 10.7 MHz. The control circuit 17 shifts by the channel of received FM bands. Specifically, as shown in Fig. 3B, RF frequency is shifted in the direction of lower frequency from RF frequency Fd of the desired channel to FdL, then in the direction of higher frequency to FdH, and finally back to Fd. When RF frequency is shifted, the control circuit 17 detects electric field strength at RF frequency FdH and stores it in an internal memory (not shown) of the control circuit 17 and detects electric field strength at RF frequency FdL and stores it in the internal memory (S11). The level and amount of other interference signals generated near the desired channel are detected by shifting RF frequency and detecting its electric field strength. Judgment on whether both values of received electric field strength at RF frequencies FdL and FdH are lower than predetermined level V2 will then be made (S12). If both values of received electric field strength at RF frequencies FdL and FdH are lower than predetermined level V2, a judgment is made that a lack of the electric field strength of the desired channel is the case of the worsened receiving state. Also, if at least one of the values of received electric field strength at RF frequencies FdL and FdH is higher than the predetermined level V2, a judgment is made that other signals generated near the desired channel have interfered with the desired channel because of small electric field strength of the desired channel.

In step S12, if both values of received electric field strength at RF frequencies FdL and FdH are lower than predetermined level V2, the control circuit 17 judges that there is no interference and the process proceeds to step S4. That is, wide IF signals are selected and the normal receiving in a weak state of electric field continues for a predetermined time, after which the detection of adjacent-channel interference begins again. Also, if at least one value of received electric field strength at RF frequencies FdL and FdH is higher than predetermined level V2, the process proceeds to step S8. That is, noise generating near the desired channel can be rejected by selecting narrow IF signals, resulting in a better receiving state of the FM radio receiver. After a predetermined time, the FM radio receiver will switch from the wait state to the normal receiving state and then begin the detection of adjacent-channel interference again.

If passing bands of the wide-band filter 4W and narrow-band filter 4N and detection range Δf of IF frequency are set as shown in Fig. 3A, adjacent-channel interference can be reliably rejected. In step S2, the frequency of wide IF signals was counted only once, but it may be counted more than once. In this case, the process can proceed to step S3 when the count values match. This enables judgment on whether the adjacent-channel interference is temporary or constant. Also, in step S6 electric field strength may be measured more than once. Electric field strength received especially by a car tuner will change as it moves, and so adjacent-channel interference can be reliably detected by using the average of the measurements.

Typically, an FM radio receiver has an IF counter which detects the frequency of IF signals to detect a channel at the time of search. This IF counter for search can also be used for the detection of adjacent-channel interference, eliminating the need for a new IF counter.

The level of IF signals of an adjacent interference channel overlapping with IF signals of the desired channel depend on electric field strength of the interference channel. The amount of change in the frequency of IF signals and a count value of the IF counter 15 therefore depend on electric field strength of an interference channel. As a result, sensitivity for the detection of adjacent-channel interference can be freely set by freely changing detection range Δf.

In step S11, as shown in Fig. 3C, RF frequency may be shifted from desired channel Fd to FdL and then from FdL back to desired channel Fd and may, further, be shifted from desired channel Fd to FdH and then from FdH back to desired channel Fd. This shift operation will be effective when a local oscillation frequency of the local oscillation circuit 3 changes slowly. The time required to actually shift a local oscillation frequency can be shortened by accomplishing the task in multiple steps, which also serves to eliminate sound pause.

While what has been described is, at present, considered to be the preferred embodiment of the invention, it will be understood that various modifications may be made thereto, and it is intended that the appended claims cover all such modifications falling within the true spirit and scope of the invention.

## Claims

1. An FM radio receiver for receiving FM signals, comprising:
an IF counter (15) for counting the frequency of IF signals, and
a detection circuit (17) for detecting the occurrence of adjacent-channel interference wherein said detection circuit is arranged to detect the occurrence of adjacent-channel interference when a count value of said IF counter (15) is outside a predetermined range including the center frequency of IF signals.

2. The FM radio receiver according to claim 1, wherein said detection range is set within a passing band of a narrow-band filter (4N).

3. The FM radio receiver according to claim 1, wherein said detection circuit (17) detects the occurrence of adjacent-channel interference when a count value of said IF counter (15) is equal to a predetermined value.

4. The FM radio receiver according to any of claims 1 to 3, wherein said IF counter (15) is used as a search IF counter for counting the frequency of IF signals in the case of searching a channel.

5. The FM radio receiver according to any of claims 1 to 4, further comprising;
a wide-band filter (4W) and a narrow-band filter (4N) for limiting the band of IF signals;
a selector circuit (6) for selecting either of output signals from said wide-band filter (4W) and ones from said narrow-band filter (4N); and
a control circuit (17) for switching said selector circuit (6) based on a detected result of said detection circuit (17).

6. The FM radio receiver according to claim 5, wherein in the case of adjacent-channel interference occurring said control circuit (17) makes said selector circuit (6) select output signals from said narrow-band filter (4N) and in the case of adjacent-channel interference not occurring said control circuit makes said selector circuit select output signals from said wide-band filter (4W).

7. The FM radio receiver according to claim 5, further comprising:
an electric field strength detection circuit (16) for detecting received electric field strength of a desired channel; and
a comparison circuit for comparing the received electric field strength of the desired channel with a first level;
wherein said control circuit (17) makes said selector circuit (6) select either output signals from said wide-band filter (4W) or ones from said narrow-band filter (4N) based on a comparison result of said first comparison circuit.

8. The FM radio receiver according to claim 7, wherein, when the received electric field strength of said desired channel is higher than said first level, said control circuit (17) causes said selector circuit (6) to select output signals from said narrow-band filter (4N); and, when the received electric field strength of said desired channel is lower than said first level, said control circuit (17) causes said selector circuit (6) to select output signals from said wide-band filter (4W).

9. The FM radio receiver according to claim 8, further comprising a shift circuit for shifting a received frequency to one near said desired channel, and wherein said electric field strength detection circuit (16) detects received electric field strength in the case of the received frequency being shifted, said comparison circuit compares the received electric field strength with a second level in the case of the received frequency being shifted, and said control circuit (17) makes said selector circuit (6) select either output signals from said wide-band filter (4W) or ones from said narrow-band filter (4N) based on the comparison result.

10. The FM radio receiver as defined in claim 9, wherein, when the received electric field strength with said shifted received frequency is higher than said second level, said control circuit (17) causes said selector circuit (6) to select output signals from said narrow-band filter (gun); and, when the received electric field strength with said shifted received frequency is lower than said second level, said control circuit (17) causes said selector circuit (6) to select output signals from said wide-band filter (4W).

11. The FM radio receiver as defined in claim 9, wherein said shift circuit shifts the received frequency to frequencies a predetermined distance above and below said desired channel, said detection means detects electric field strength at each of the shifted received frequencies, and said control means (17) causes said selector circuit (6) to select output signals from said narrow-band filter (4N) when at least one of the received electric field strength detected being higher than said second level.

12. The FM radio receiver as defined in claim 11, wherein said predetermined frequency is equal to a frequency interval between two adjacent channels within the received FM band.

## Patentansprüche

1. Frequenzmodulations- bzw. FM-Funkempfänger zum Empfang von FM-Signalen, welcher Folgendes aufweist:
einen Zwischenfrequenz- bzw. ZF-Zähler (15) zum Zählen der Frequenz von ZF-Signalen, und
einen Erfassungsschaltkreis (17) zur Erfassung des Auftretens einer Nachbarkanalstörung, **dadurch gekennzeichnet, dass** der Erfassungsschaltkreis zur Erfassung des Auftretens einer Nachbarkanalstörung angeordnet ist, wenn ein Zählwert des ZF-Zählers (15) außerhalb eines vorher festgelegten Bereichs liegt, welcher die Mittenfrequenz von ZF-Signalen einschließt.

2. FM-Funkempfänger nach Anspruch 1, **dadurch gekennzeichnet, dass** der Erfassungsbereich innerhalb eines Durchlassbandes eines Schmalbandfilters (4N) festgelegt ist.

3. FM-Funkempfänger nach Anspruch 1, **dadurch gekennzeichnet, dass** der Erfassungsschaltkreis (17) das Auftreten einer Nachbarkanalstörung erfasst, wenn ein Zählwert des ZF-Zählers (15) gleich einem vorher festgelegten Wert ist.

4. FM-Funkempfänger nach einem der Ansprüche 1 bis 3, **dadurch gekennzeichnet, dass** der ZF-Zähler (15) als ein Such-ZF-Zähler zum Zählen der Frequenz von ZF-Signalen im Falle der Suche nach einem Kanal verwendet wird.

5. FM-Funkempfänger nach einem der Ansprüche 1 bis 4, welcher des Weiteren Folgendes aufweist:
ein Breitbandfilter (4W) und ein Schmalbandfilter (4N) zur Begrenzung des Bandes von ZF-Signalen;
einen Selektorschaltkreis (6) zur Selektion entweder von Ausgangssignalen aus dem Breitbandfilter (4W) oder von Ausgangssignalen aus dem Schmalbandfilter (4N); sowie
einen Steuerschaltkreis (17) zum Schalten des Selektorschaltkreises (6) basierend auf einem erfassten Messwert des Erfassungsschaltkreises (17).

6. FM-Funkempfänger nach Anspruch 5, **dadurch gekennzeichnet, dass** der Steuerschaltkreis (17) im Falle einer auftretenden Nachbarkanalstörung den Selektorschaltkreis (6) veranlasst, Ausgangssignale aus dem Schmalbandfilter (4N) zu selektieren, und der Steuerschaltkreis im Falle einer nicht auftretenden Nachbarkanalstörung den Steuerschaltkreis veranlasst, Ausgangssignale aus dem Breitbandfilter (4W) zu selektieren.

7. FM-Funkempfänger nach Anspruch 5, welcher des Weiteren Folgendes aufweist:
einen elektrischen Feldstärken-Erfassungsschaltkreis (16) zur Erfassung einer empfangenen elektrischen Feldstärke eines gewünschten Kanals; und
einen Vergleichsschaltkreis zum Vergleich der empfangenen elektrischen Feldstärke des gewünschten Kanals mit einem ersten Pegel bzw. Niveau;
**dadurch gekennzeichnet, dass** der Steuerschaltkreis (17) den Selektorschaltkreis (6) veranlasst, entweder Ausgangssignale aus dem Breitbandfilter (4W) oder Ausgangssignale aus dem Schmalbandfilter (4N) basierend auf einem Vergleichsergebnis des ersten Vergleichsschaltkreises zu selektieren.

8. FM-Funkempfänger nach Anspruch 7, **dadurch gekennzeichnet, dass** wenn die empfangene elektrische Feldstärke des gewünschten Kanals höher als der erste Pegel ist, der Steuerschaltkreis (17) den Selektorschaltkreis (6) veranlasst, Ausgangssignale aus dem Schmalbandfilter (4N) zu selektieren; und wenn die empfangene elektrische Feldstärke des gewünschten Kanals niedriger als der erste Pegel ist, der Steuerschaltkreis (17) den Selektorschaltkreis (6) veranlasst, Ausgangssignale aus dem Breitbandfilter (4W) zu selektieren.

9. FM-Funkempfänger nach Anspruch 8, welcher des Weiteren einen Verschiebungsschaltkreis zur Verschiebung bzw. Verlagerung einer empfangenen Frequenz zu einer Frequenz nahe dem gewünschten Kanal aufweist, und wobei der elektrische Feldstärken-Erfassungsschaltkreis (16) eine empfangene elektrische Feldstärke im Falle einer Verschiebung der empfangenen Frequenz erfasst; wobei der Vergleichsschaltkreis die empfangene elektrische Feldstärke mit einem zweiten Pegel bzw. Niveau im Falle der Verschiebung der empfangen Frequenz vergleicht, und der Steuerschaltkreis (17) den Selektorschaltkreis (6) basierend auf dem Vergleichsergebnis veranlasst, entweder Ausgangssignale aus dem Breitbandfilter (4W) oder Ausgangssignale aus dem Schmalbandfilter (4N) zu selektieren.

10. FM-Funkempfänger nach Anspruch 9, **dadurch gekennzeichnet, dass** wenn die empfangene elektrische Feldstärke bei der verlagerten empfangenen Frequenz höher als der zweite Pegel ist, der Steuerschaltkreis (17) den Selektorschaltkreis (6) veranlasst, Ausgangssignale aus dem Schmalbandfilter (4N) zu selektieren; und wenn die empfangene elektrische Feldstärke bei der verlagerten empfangenen Frequenz niedriger als der zweite Pegel ist, der Steuerschaltkreis (17) den Selektorschaltkreis (6) veranlasst, Ausgangssignale aus dem Breitbandfilter (4W) zu selektieren.

11. FM-Funkempfänger nach Anspruch 9, **dadurch gekennzeichnet, dass** der Verschiebungsschaltkreis die empfangene Frequenz zu Frequenzen mit einem vorher festgelegten Abstand zu dem gewünschten Kanal oberhalb und unterhalb des Kanals verschiebt, dass der Erfassungsschaltkreis die elektrische Feldstärke an jeder der verlagerten empfangenen Frequenzen erfasst, und dass die Steuervorrichtung (17) den Selektorschaltkreis (6) veranlasst, Ausgangssignale aus dem Schmalbandfilter (4N) zu selektieren, wenn zumindest eine der erfassten empfangenen elektrischen Feldstärken höher als der zweite Pegel ist.

12. FM-Funkempfänger nach Anspruch 11, **dadurch gekennzeichnet, dass** die vorher festgelegte Frequenz gleich einem Frequenzintervall zwischen zwei benachbarten Kanälen innerhalb des empfangenen FM-Bandes ist.

## Revendications

1. Récepteur radio FM pour recevoir des signaux FM, comprenant:
un compteur IF (15) pour compter la fréquence de signaux IF, et
un circuit de détection (17) pour détecter la survenue d'une interférence de canal adjacent, où ledit circuit de détection est agencé pour détecter la survenue d'une interférence de canal adjacent lorsqu'une valeur de comptage dudit compteur IF (15) se situe en dehors d'une plage prédéterminée incluant la fréquence centrale des signaux IF.

2. Récepteur radio FM selon la revendication 1, dans lequel ladite plage de détection est réglée à l'intérieur d'une bande passante d'un filtre à bande étroite (4N).

3. Récepteur radio FM selon la revendication 1, dans lequel ledit circuit de détection (17) détecte la survenue d'une interférence de canal adjacent lorsqu'une valeur de comptage dudit compteur IF (15) est égale à une valeur prédéterminée.

4. Récepteur radio FM selon l'une quelconque des revendications 1 à 3, dans lequel ledit compteur IF (15) est utilisé comme un compteur de recherche IF pour compter la fréquence de signaux IF dans le cas de la recherche d'un canal.

5. Récepteur radio FM selon l'une quelconque des revendications 1 à 4, comprenant en outre:
un filtre à bande large (4W) et un filtre à bande étroite (4N) pour limiter la bande de signaux IF;
un circuit sélecteur (6) pour sélectionner l'un parmi les signaux de sortie dudit filtre à bande large (4W) et de ceux dudit filtre à bande étroite (4N); et
un circuit de commande (17) pour commuter ledit circuit sélecteur (6) sur la base d'un résultat détecté dudit circuit de détection (17).

6. Récepteur radio FM selon la revendication 5, dans lequel, dans le cas de la survenue d'une interférence de canal adjacent, ledit circuit de commande (17) amène ledit circuit sélecteur (6) à sélectionner des signaux de sortie dudit filtre à bande étroite (4N) et dans le cas d'une non-survenue d'une interférence de canal adjacent, ledit circuit de commande amène ledit circuit sélecteur à sélectionner des signaux de sortie dudit filtre à bande large (4W).

7. Récepteur radio FM selon la revendication 5, comprenant en outre:
un circuit de détection de force de champ électrique (16) pour détecter la force du champ électrique reçu d'un canal souhaité; et
un circuit de comparaison pour comparer la force du champ électrique reçu du canal souhaité avec un premier niveau;
dans lequel ledit circuit de commande (17) amène ledit circuit sélecteur (6) à sélectionner soit les signaux de sortie dudit filtre à bande large (4W) soit ceux dudit filtre à bande étroite (4N) sur la base d'un résultat de comparaison dudit premier circuit de comparaison.

8. Récepteur radio FM selon la revendication 7, dans lequel, lorsque la force du champ électrique reçu dudit canal souhaité est plus élevée que ledit premier niveau, ledit circuit de commande (17) amène ledit circuit sélecteur (6) à sélectionner des signaux de sortie dudit filtre à bande étroite (4N); et lorsque la force du champ électrique reçu dudit canal souhaité est plus basse que ledit premier niveau, ledit circuit de commande (17) amène ledit circuit sélecteur (6) à sélectionner des signaux de sortie dudit filtre à bande large (4W).

9. Récepteur radio FM selon la revendication 8, comprenant en outre un circuit de décalage pour décaler une fréquence reçue à une proche dudit canal souhaité, et où ledit circuit de détection (16) de la force du champ électrique détecte la force du champ électrique reçu dans le cas où la fréquence reçue est décalée, ledit circuit de comparaison compare la force du champ électrique reçu avec un deuxième niveau dans le cas où la fréquence reçue est décalée, et ledit circuit de commande (17) amène ledit circuit sélecteur (6) à sélectionner soit les signaux de sortie dudit filtre à bande large (4W) soit ceux dudit filtre à bande étroite (4N) sur la base du résultat de la comparaison.

10. Récepteur radio FM selon la revendication 9, dans lequel, lorsque la force du champ électrique reçu avec ladite fréquence décalée reçue est plus élevée que ledit deuxième niveau, ledit circuit de commande (17) amène ledit circuit sélecteur (6) à sélectionner des signaux de sortie dudit filtre à bande étroite (4N); et lorsque la force du champ électrique reçu avec ladite fréquence décalée reçue est inférieure audit deuxième niveau, ledit circuit de commande (17) amène ledit circuit sélecteur (6) à sélectionner des signaux de sortie dudit filtre à bande large (4w) .

11. Récepteur radio FM selon la revendication 9, dans lequel ledit circuit de décalage décale la fréquence reçue à des fréquences d'une distance prédéterminée au-dessus et en dessous dudit canal souhaité, ledit moyen de détection détecte la force du champ électrique à chacune des fréquences décalées reçues, et ledit moyen de commande (17) amène ledit circuit sélecteur (6) à sélectionner des signaux de sortie dudit filtre à bande étroite (4N) lorsqu'au moins une de la force du champ électrique reçu détectée est plus élevée que ledit deuxième niveau.

12. Récepteur radio FM selon la revendication 11, dans lequel ladite fréquence prédéterminée est égale à un intervalle de fréquence entre deux canaux adjacents dans la bande FM reçue.
